Europäisches Patentamt

European Patent Office

Office européen des brevets

(19)

(11) Veröffentlichungsnummer : **0 330 810 B1**

(12) **EUROPÄISCHE PATENTSCHRIFT**

(45) Veröffentlichungstag der Patentschrift :
05.06.91 Patentblatt 91/23

(51) Int. Cl.$^5$ : **G01B 11/26**, G01D 5/38

(21) Anmeldenummer : **89100054.9**

(22) Anmeldetag : **04.01.89**

(54) **Lichtelektrische Winkelmesseinrichtung.**

(30) Priorität : **04.03.88 DE 3807011**

(43) Veröffentlichungstag der Anmeldung :
**06.09.89 Patentblatt 89/36**

(45) Bekanntmachung des Hinweises auf die
Patenterteilung :
**05.06.91 Patentblatt 91/23**

(84) Benannte Vertragsstaaten :
**AT CH DE ES FR GB IT LI NL SE**

(56) Entgegenhaltungen :
**GB-A- 1 287 462**
**US-A- 3 573 468**
**US-A- 4 253 021**

(73) Patentinhaber : **Dr. Johannes Heidenhain GmbH**
**Dr.-Johannes-Heidenhain-Strasse 5 Postfach 1260**
**W-8225 Traunreut (DE)**

(72) Erfinder : **Ernst, Alfons, Dipl.-Ing.**
**Traunring 62**
**W-8225 Traunreut (DE)**

EP 0 330 810 B1

## Beschreibung

Die Erfindung betrifft eine lichtelektrische Winkelmeßeinrichtung.

Derartige Winkelmeßeinrichtungen werden insbesondere bei Bearbeitungsmaschinen zur Messung der Relativlage eines Werkzeugs bezüglich eines zu bearbeitenden Werkstücks eingesetzt.

In der DE-A- 36 33 574 vg/öffentlich 14, 4, 88 ist eine interferometrische Winkelmeßeinrichtung beschrieben, bei der eine drehbare Teilscheibe eine radiale Winkelteilung in Form eines Beugungsgitters aufweist. Zur Abtastung dieser Winkelteilung fällt ein von einem Laser ausgehender Lichtstrahl senkrecht auf einen ersten Winkelteilungsbereich und wird vom Beugungsgitter in zwei Beugungsstrahlen mit einem bestimmten Beugungswinkel aufgespalten, die sich wieder nach einer zweifachen Umlenkung unter dem gleichen Beugungswinkel in einem diametral gegenüberliegenden zweiten Winkelteilungsbereich vereinigen. Durch das Beugungsgitter des zweiten Winkelteilungsbereichs werden die beiden Beugungsstrahlen zur Interferenz gebracht, durchsetzen anschließend ein polarisierendes Teilerprisma und fallen auf zwei Photoelemente, die zwei um 90° gegeneinander phasenversetzte Abtastsignale zur Gewinnung der Meßwerte für die Winkellage der Teilscheibe erzeugen.

Bei einer solchen interferometrischen Abtastung einer Winkelteilung mit radial verlaufenden Teilungsstrichen bewirkt die Fächerung der radialen Winkelteilung (Unparallelität der Teilungsstriche) Deformationen der in den Winkelteilungsbereichen auftreffenden Wellenfronten des Lichtstrahls und der Beugungsstrahlen. Eine Abhilfe läßt sich dadurch erzielen, daß nur ein kleiner Bereich der Winkelteilung abgetastet wird, innerhalb dessen die Unparallelität der Teilungsstriche vernachlässigt werden kann. Diese Abtastung eines kleinen Winkelteilungsbereichs weist jedoch den Nachteil auf, daß unvermeidbare örtliche Fehler der Winkelteilung den Meßwert unzulässig verfälschen können ; die durch derartige örtliche Fehler der Winkelteilung auftretenden Meßfehler können wiederum durch die Abtastung eines größeren Winkelteilungsbereiches durch Mittelung eliminiert werden, wobei jedoch wieder der eingangs erwähnte Fehlereinfluß die Meßgenauigkeit beeinträchtigt. Einen weiteren nachteiligen Einfluß auf die Meßgenauigkeit können temperaturbedingte Frequenzänderungen preiswerter Halbleiterdioden ausüben, die den Interferenzpunkt der Wellenfronten der Beugungsstrahlen verändern.

Der Erfindung liegt die Aufgabe zugrunde, bei einer Winkelmeßeinrichtung der genannten Gattung die Winkelteilung so auszubilden, daß Meßungenauigkeiten bei der großflächigen Abtastung mittels Lichtstrahlenbeugung ausgeschlossen sind.

Diese Aufgabe wird erfindungsgemäß durch die Merkmale des Patentanspruchs 1 gelöst. Dabei sind evolventenförmige Teilangs stüde aus der US-A-4253021 bezannt.

Die mit der Erfindung erzielten Vorteile bestehen insbesondere darin, daß durch die evolventenförmige Ausbildung der wenigstens einen Winkelteilung die Teilungsstriche schwächer gefächert sind, so daß die in den Winkelteilungsbereichen auftreffenden Wellenfronten des Lichtstrahls und der Beugungsstrahlen keine Deformationen erleiden, die Meßungenauigkeiten hervorrufen können. Da die Gitterkonstante der Winkelteilung in bevorzugter Ausführung mit der Gitterkonstanten der Linearteilungen übereinstimmt, verändern temperaturbedingte Frequenzänderungen preiswerter Halbleiterlaser nicht den Interferenzpunkt der Wellenfronten der Beugungsstrahlen, so daß die Meßgenauigkeit nicht beeinträchtigt wird.

Weitere vorteilhafte Ausbildungen der Erfindung entnimmt man den abhängigenPatentansprüchen.

Ausführungsbeispiele der Erfindung werden anhand der Zeichnung näher erläutert.

Es zeigen :

Figur 1 schematisch eine erste lichtelektrische Winkelmeßeinrichtung in einer Draufsicht und

Figur 2 in einer Seitenansicht ;

Figur 3 einen ersten entfalteten Strahlengang ;

Figur 4 schematisch eine zweite lichtelektrische Winkelmeßeinrichtung in einer Draufsicht ;

Figur 5 einen zweiten entfalteten Strahlengang ;

Figur 6 schematisch eine dritte lichtelektrische Winkelmeßeinrichtung in einer Draufsicht und

Figur 7, 8 in zwei Seitenansichten ;

Figur 9 einen dritten entfalteten Strahlengang ;

Figur 10 schematisch eine vierte lichtelektrische Winkelmeßeinrichtung in einer Draufsicht und

Figur 11, 12 in zwei Seitenansichten ;

Figur 13 einen vierten entfalteten Strahlengang.

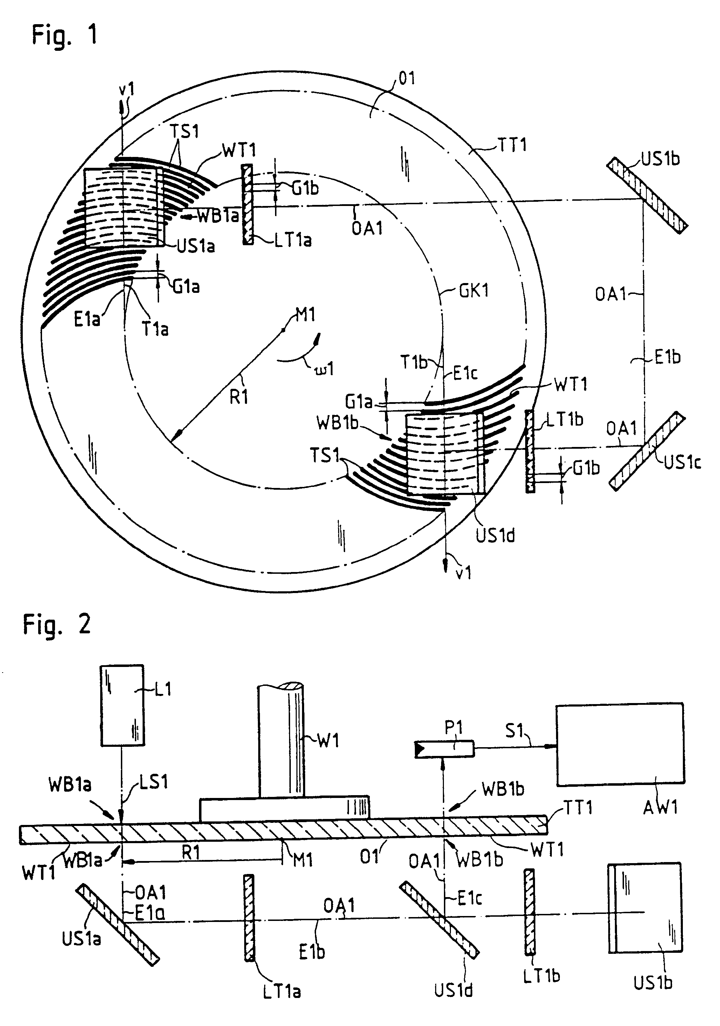

In Figur 1 ist schematisch eine erste lichtelektrische Winkelmeßeinrichtung in einer Draufsicht und in Figur 2 in einer Seitenansicht dargestellt. Eine mittels einer Welle W1 drehbar gelagerte ebene Teilscheibe TT1 ist mit einem nicht gezeigten drehbaren Objekt verbunden. Die Teilscheibe TT1 weist auf einer ebenen Oberfläche 01 eine zu ihrem Mittelpunkt M1 konzentrische Winkelteilung WT1 in Form eines Beugungsgitters auf, die aus evolventenförmigen Teilungsstrichen TS1 besteht, die von einem im Mittelpunkt M1 der Teilscheibe TT1 zentrierten Grundkreis GK1 mit dem Radius R1 ausgehen ; die Breite der evolventenförmigen Teilungsstriche TS1 und der Abstand zwischen diesen sind gleich.

Diese Winkelteilung WT1 mit einer Gitterkonstanten G1a wird von einer mit einem nicht gezeigten feststehenden Objekt verbundenen Abtasteinrichtung abgetastet, die eine Lichtquelle L1 in Form eines Halbleiterlasers, vier Umlenkspiegel US1a-US1d, zwei Linearteilungen LT1a, LT1b sowie ein Photoelement P1 aufweist ; die Gitterkonstante G1b der beiden Linearteilungen LT1a, LT1b ist mit der Gitterkonstanten G1a der evolventenförmigen Winkelteilung WT1 der Teilscheibe TT1 identisch. Es können das drehbare Objekt durch eine Spindel und das feststehende Objekt durch das Bett einer Bearbeitungsmaschine gebildet sein.

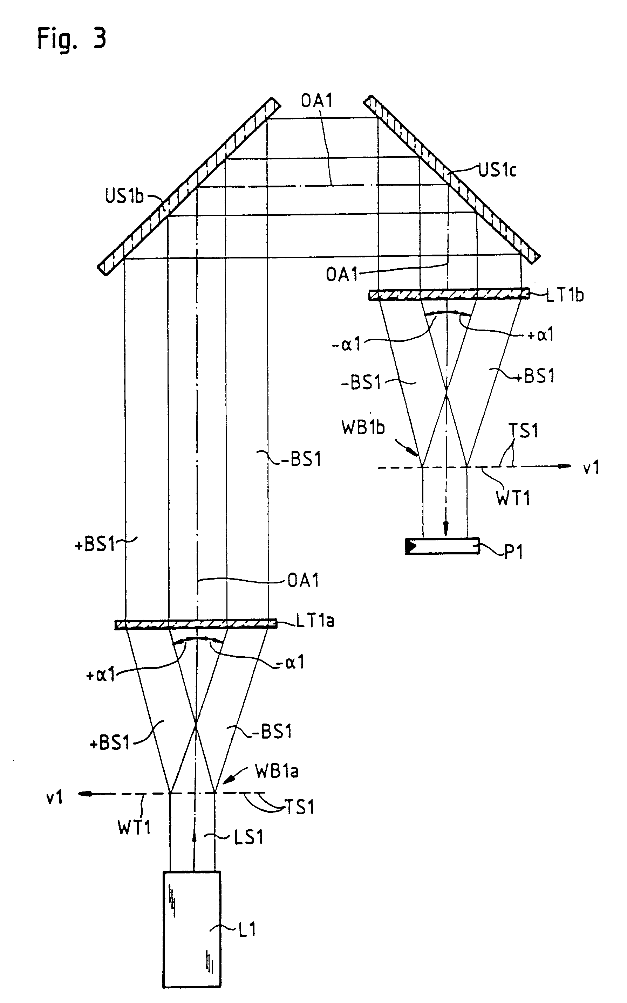

In Figur 3 ist ein erster teilweise entfalteter Strahlengang innerhalb der Abtasteinrichtung dargestellt. Ein vom Halbleiterlaser L1 ausgehender linear polarisierter Lichtstrahl LS1 durchsetzt senkrecht zur ebenen Oberfläche 01 der Teilscheibe TT1 einen ersten Winkelteilungsbereich WB1a der evolventenförmigen Winkelteilung WT1 der Teilscheibe TT1 im Durchlicht, der beliebig auf einer ersten Tangente T1a an den Grundkreis GK1 liegt, und wird von der als Beugungsgitter ausgebildeten Winkelteilung WT1 des ersten Winkelteilungsbereiches WB1a in einen positiven Beugungsstrahl + BS1 erster Ordnung unter einem positiven Beugungwinkel + $\alpha$1 und in einen negativen Beugungsstrahl – BS1 erster Ordnung unter einem negativen Beugungswinkel – $\alpha$1 zur optischen Achse OA1 des Strahlengangs aufgespalten.

Die beiden unter den beiden zugehörigen Beugungswinkeln + $\alpha$1, – $\alpha$1 vom ersten Winkelteilungsbereich WB1a in einer ersten Ebene E1a durch die erste Tangente T1a senkrecht zur Oberfläche 01 der Teilscheibe TT1 ausgehenden Beugungsstrahlen + BS1, – BS1 erster Ordnung werden vom ersten Umlenkspiegel US1a in eine zweite Ebene E1b parallel zur Oberfläche 01 der Teilscheibe TT1 umgelenkt und von der ersten Linearteilung LT1a parallel gerichtet. Die beiden parallelen Beugungsstrahlen + BS1, – BS1 werden sodann in dieser zweiten Ebene E1b durch den zweiten Umlenkspiegel US1b rechtwinklig und durch den dritten Umlenkspiegel US1c wiederum rechtwinklig umgelenkt und von der zweiten Linearteilung LT1b unter den gleichen zugehörigen Beugungswinkeln + $\alpha$1, – $\alpha$1 gebeugt und nach einer Umlenkung durch den vierten Umlenkspiegel US1d in eine dritte Ebene E1C parallel zur ersten Ebene E1a in einem zweiten Winkelteilungsbereich WB1b der Winkelteilung WT1 vereinigt, der beliebig auf einer zweiten Tangente T1b an den Grundkreis GK1 liegt. Die dritte Ebene E1C verläuft senkrecht zur Oberfläche 01 der Teilscheibe TT1 durch die zweite Tangente T1b, die antiparallel zur ersten Tangente T1a angeordnet ist.

Im zweiten Winkelteilungsbereich WB1b werden die beiden Beugungsstrahlen + BS1, – BS1 von der als Beugungsgitter ausgebildeten Winkelteilung WT1 zur Interferenz gebracht und fallen senkrecht zur Oberfläche 01 der Teilscheibe TT1 auf das Photoelement P1, das ein periodisches Abtastsignal S1 bei der Abtastung der evolventenförmigen Winkelteilung WT1 durch die Abtasteinrichtung liefert. In einer der Abtasteinrichtung nachgeschalteten Auswerteeinrichtung AW1 werden aus dem periodischen Abtastsignal S1 des Photoelements P1 die Meßwerte für die Winkellage der beiden relativ zueinander drehbaren Objekte gewonnen.

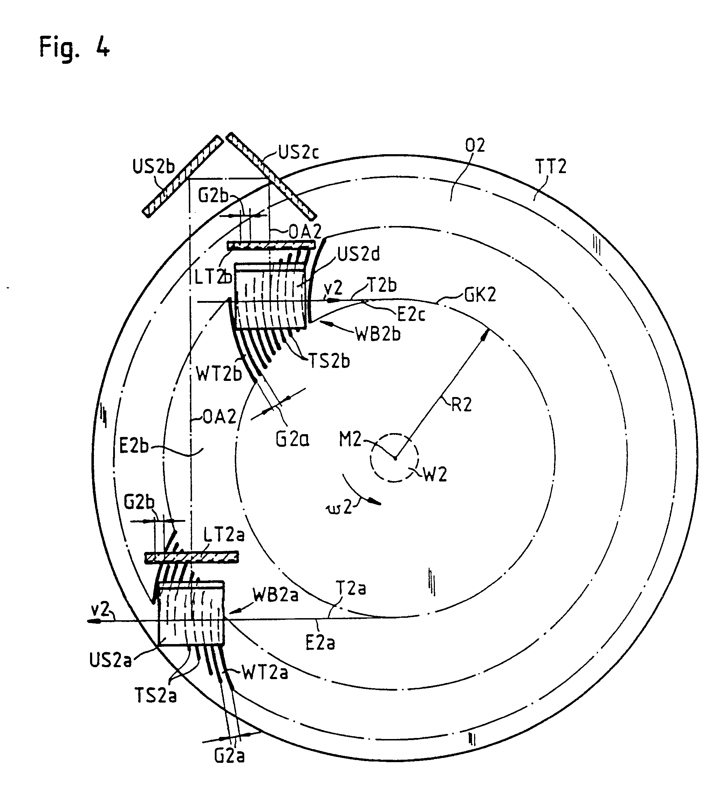

In Figur 4 ist schematisch eine zweite lichtelektrische Winkelmeßeinrichtung in einer Draufsicht dargestellt. Eine mittels einer Welle W2 drehbar gelagerte ebene Teilscheibe TT2 ist mit einem nicht gezeigten drehbaren Objekt verbunden. Die Teilscheibe TT2 weist auf einer ebenen Oberfläche 02 zwei zu ihrem Mittelpunkt M2 konzentrische Winkelteilungen WT2a, WT2b in Form von Beugungsgittern auf, die aus evolventenförmigen Teilungsstrichen TS2a, TS2b bestehen, die von einem im Mittelpunkt M2 der Teilscheibe TT2 zentrierten Grundkreis GK2 mit dem Radius R2 ausgehen ; die evolventenförmigen Teilungsstriche TS2a der äußeren Winkelteilung WT2a sind gegenüber den evolventenförmigen Teilungsstrichen TS2b der inneren Winkelteilung WT2b entgegengesetzt geneigt. Die Breite der evolventenförmigen Teilungsstriche TS2a, TS2b und der Abstand zwischen diesen sind gleich.

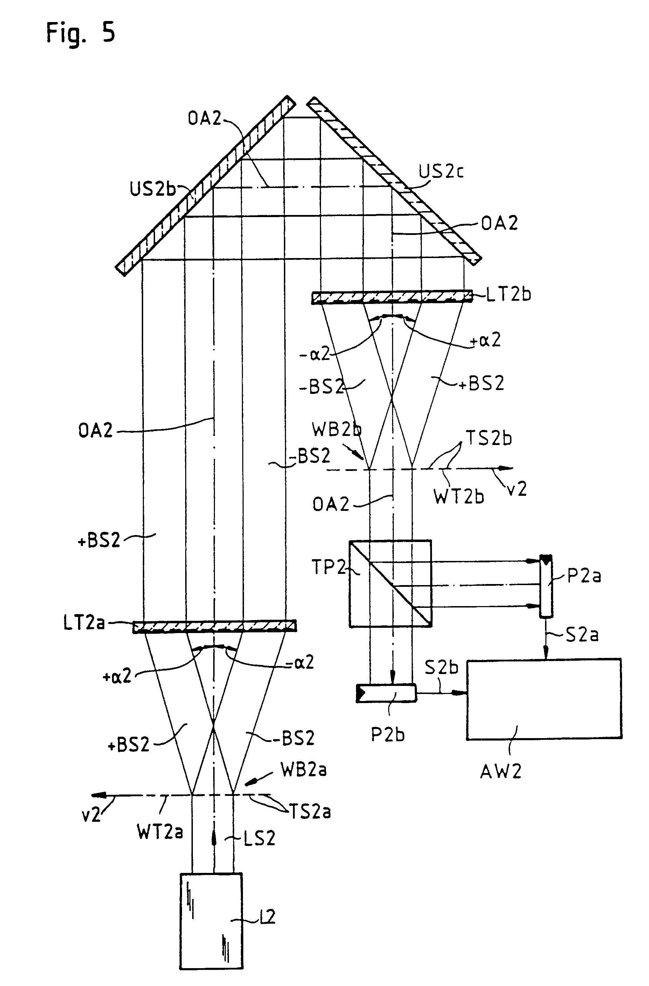

In Figur 5 ist ein zweiter teilweise entfalteter Strahlengang innerhalb einer Abtasteinrichtung dargestellt. Diese beiden Winkelteilungen WT2a, WT2b mit identischen Gitterkonstanten G2a werden von der mit einem nicht gezeigten feststehenden Objekt verbundenen Abtasteinrichtung abgetastet, die eine Lichtquelle L2 in Form eines Halbleiterlasers, vier Umlenkspiegel US2a-US2d, zwei Linearteilungen LT2a, LT2b sowie ein polarisierendes Teilerprisma TP2 und zwei Photoelemente P2a, P2b aufweist ; die Gitter konstante G2b der beiden Linearteilungen LT2a, LT2b ist mit der Gitterkonstanten G2a der beiden evolventenförmigen Winkelteilungen WT2a, WT2b der Teilscheibe TT2 identisch. Es können das drehbare Objekt durch eine Spindel und das feststehende Objekt durch das Bett einer Bearbeitungsmaschine gebildet sein.

Analog zur ersten Winkelmeßeinrichtung nach den Figuren 1-3 durchsetzt ein vom Halbleiterlaser L2 ausgehender linear polarisierter Lichtstrahl LS2 senkrecht zur ebenen Oberfläche 02 der Teilscheibe TT2 einen ersten Winkelteilungsbereich WB2a der äußeren evolventenförmigen Winkelteilung WT2a der Teilscheibe TT2 im Durchlicht, der beliebig auf einer ersten Tangente T2a an den Grundkreis GK2 liegt, und wird von der als Beugungsgitter ausgebildeten äußeren Winkelteilung WT2a des ersten Winkelteilungsbereiches WB2a in einen positiven Beugungsstrahl + BS2 erster Ordnung unter einem positiven Beugungswinkel + $\alpha$2 und in einen negativen Beugungsstrahl – BS2 erster Ordnung unter einem negativen Beugungswinkel – $\alpha$2 zur optischen Achse OA2 des Strahlenganges aufgespalten.

Die beiden unter den beiden zugehörigen Beugungswinkeln + $\alpha$2, – $\alpha$2 vom ersten Winkelteilungsbereich WB2a in einer ersten Ebene E2a durch die erste Tangente T2a senkrecht zur Oberfläche O2 der Teilscheibe TT2 ausgehenden Beugungstrahlen + BS2, – BS2 erster Ordnung werden vom ersten Umlenkspiegel US2a in eine zweite Ebene E2b parallel zur Oberfläche 02 der Teilscheibe TT2 umgelenkt und von der ersten Linearteilung LT2a parallel gerichtet. Die beiden parallelen Beugungsstrahlen + BS2, – BS2 werden sodann in dieser zweiten Ebene E2b durch den zweiten Umlenkspiegel US2b recht winklig und durch den dritten Umlenkspiegel US2c wiederum rechtwinklig umgelenkt und von der zweiten Linearteilung LT2b unter den gleichen zugehörigen Beugungswinkeln + $\alpha$2, – $\alpha$2 gebeugt und nach einer Umlenkung durch den vierten Umlenkspiegel US2d in eine dritte Ebene E2c parallel zur ersten Ebene E2a in einem zweiten Winkelteilungsbereich WB2b der inneren evolventenförmigen Winkelteilung WT2b vereinigt, der beliebig auf einer zweiten Tangente T2b an den Grundkreis GK2 liegt. Die dritte Ebene E2c verläuft senkrecht zur Oberfläche 02 der Teilscheibe TT2 durch die zweite Tangente T2b, die gleichsinnig parallel zur ersten Tangente T2a angeordnet ist. Die beiden Winkelteilungsbereiche WB2a, WB2b der beiden Winkelteilungen WT2a, WT2b liegen auf einer Hälfte der Teilscheibe TT2, so daß sich eine Verkürzung des Strahlenganges ergibt.

Im zweiten Winkelteilungsbereich WB2b werden die beiden Beugungsstrahlen + BS2, – BS2 von der als Beugungsgitter ausgebildeten inneren Winkelteilung WT2b zur Interferenz gebracht und fallen über das polarisierende Teilerprisma TP2 auf die beiden Photoelemente P2a, P2b, die zwei um 90° gegeneinander phasenversetzte periodische Abtastsignale S2a, S2b bei der Abtastung der beiden evolventenförmigen Winkelteilungen WT2a, WT2b durch die Abtasteinrichtung liefern. In einer der Abtasteinrichtung nachgeschalteten Auswerteeinrichtung AW2 werden aus diesen beiden periodischen Abtastsignalen S2a, S2b der beiden Photoelemente P2a, P2b die Meßrichtung (Drehsinn der Teilscheibe TT2) sowie die Meßwerte für die Winkellage der beiden relativ zueinander drehbaren Objekte gewonnen.

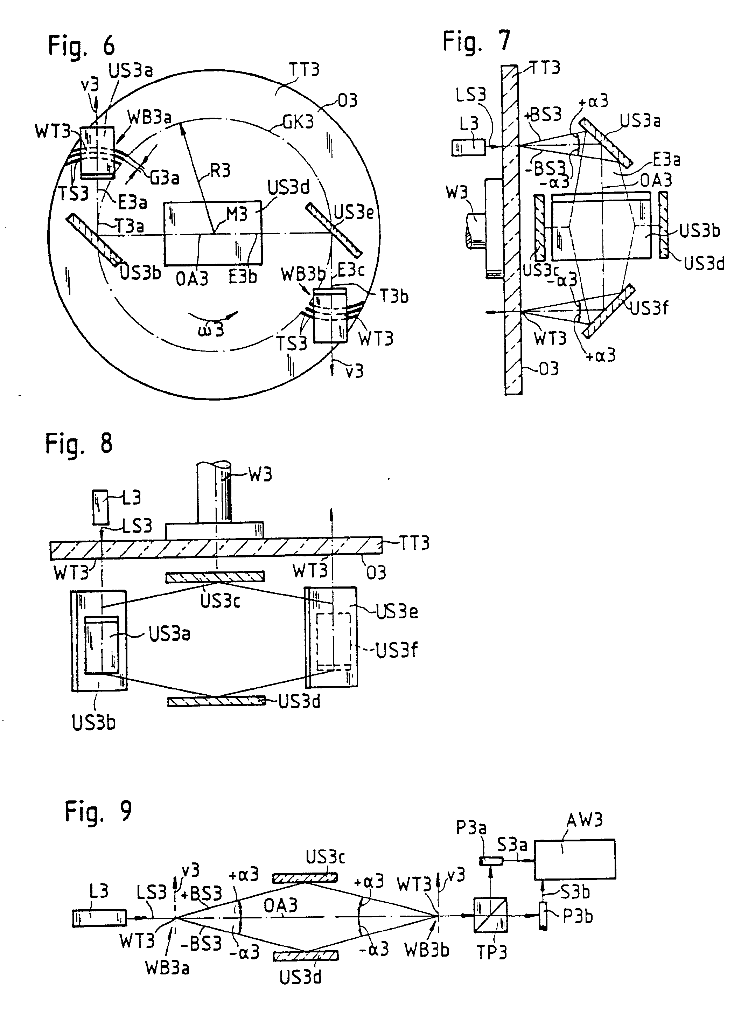

In Figur 6 ist schematisch eine dritte lichtelektrische Winkelmeßeinrichtung in einer Draufsicht und in den Figuren 7 und 8 in zwei Seitenansichten dargestellt ; Figur 9 zeigt einen dritten entfalteten Strahlengang in einer Abtasteinrichtung.

Eine mittels einer Welle W3 drehbar gelagerte ebene Teilscheibe TT3 ist mit einem nicht gezeigten drehbaren Objekt verbunden. Die Teilscheibe TT3 weist auf einer ebenen Oberfläche 03 eine zu ihrem Mittelpunkt M3 konzentrische Winkelteilung WT3 in Form eines Beugungsgitters auf, die aus evolventenförmigen Teilungsstrichen TS3 besteht, die von einem im Mittelpunkt M3 der Teilscheibe TT3 zentrierten Grundkreis GK3 mit dem Radius R3 ausgehen ; die Breite der evolventenförmigen Teilungsstriche TS3 und der Abstand zwischen diesen sind gleich.

Diese Winkelteilung WT3 mit einer Gitterkonstanten G3a wird von der mit einem nicht gezeigten feststehenden Objekt verbundenen Abtasteinrichtung abgetastet, die eine Lichtquelle L3 in Form eines Halbleiterlasers, sechs Umlenkspiegel US3a-US3f, ein polarisierendes Teilerprisma TP3 sowie zwei Photoelemente P3a, P3b aufweist.

Ein vom Halbleiterlaser L3 ausgehender linear polarisierter Lichtstrahl LS3 durchsetzt senkrecht zur ebenen Oberfläche 03 der Teilscheibe TT3 einen ersten Winkelteilungsbereich WB3a der evolventenförmigen Winkelteilung WT3 der Teilscheibe TT3 im Durchlicht, der beliebig auf einer ersten Tangente T3a an dem Grundkreis GK3 liegt, und wird von der als Beugungsgitter ausgebildeten Winkelteilung WT3 des ersten Winkelteilungsbereichs WB3a in einen positiven Beugungsstrahl + BS3 erster Ordnung unter einen positiven Beugungswinkel + $\alpha$3 und in einen negativen Beugungstrahl – BS3 erster Ordnung unter einem negativen Beugungwinkel – $\alpha$3 zur optischen Achse OA3 des Strahlengangs aufgespalten.

Die beiden unter den beiden zugehörigen Beugungswinkeln + $\alpha$3, – $\alpha$3 vom ersten Winkelteilungsbereich WB3a in einer ersten Ebene E3a durch die erste Tangente T3a senkrecht zur Oberfläche 03 der Teilscheibe TT3 ausgehenden Beugungsstrahlen + BS3, – BS3 erster Ordnung werden vom ersten Umlenkspiegel US3a in dieser ersten Ebene E3a und vom zweiten Umlenkspiegel US3b in eine zweite Ebene E3b senkrecht zur ersten Ebene E3a und senkrecht zur Oberfläche 03 der Teilscheibe TT3 umgelenkt. Nach einer Umlenkung durch den dritten Umlenkspiegel US3c und den vierten Umlenkspiegel US3d in dieser zweiten Ebene E3b werden die beiden Beugungsstrahlen + BS3, – BS3 erster Ordnung durch den fünften Umlenkspiegel US3e in eine dritte Ebene E3c parallel zur ersten Ebene E3a umgelenkt und in einem zweiten Winkelteilungsbereich WB3b der Winkelteilung WT3 vereinigt, der beliebig auf einer zweiten Tangente T3b an den Grundkreis GK3 liegt. Die dritte Ebene E3C verläuft senkrecht zur Oberfläche 03 der Teilscheibe TT3 durch die zweite Tangente T3b, die antiparallel zur ersten Tangente T3a angeordnet ist.

Im zweiten Winkelteilungsbereich WB3b werden die beiden Beugungsstrahlen + BS3, – BS3 von der als Beugungsgitter ausgebildeten Winkelteilung WT3 zur Interferenz gebracht und fallen über das polarisierende Teilerprisma TP3 auf die beiden Photoelemente P3a, P3b, die zwei un 90° gegeneinander phasenversetzte periodische Abtastsignale S3a, S3b bei der Abtastung der evolventenförmigen Winkelteilung WT3 durch die Abtasteinrichtung liefern. In einer der Abtasteinrichtung nachgeschalteten Auswerteeinrichtung AW3 werden aus diesen beiden periodischen Abtastsignalen S3a, S3b der beiden Photoelemente P3a, P3b die Meßrichtung (Drehsinn der Teilscheibe TT3) sowie die Meßwerte für die Winkellage der beiden relativ zueinander drehbaren Objekte gewonnen.

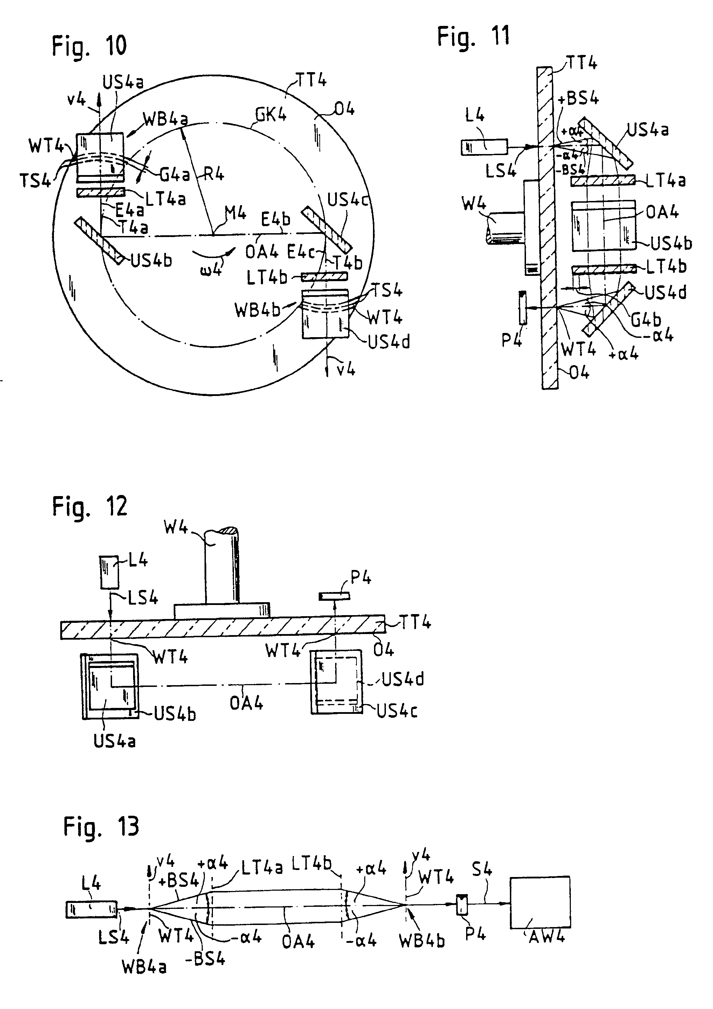

In Figur 10 ist schematisch eine vierte lichtelektrische Winkelmeßeinrichtung in einer Draufsicht und in den Figuren 11 und 12 in zwei Seitenansichten dargestellt; Figur 13 zeigt einen vierten entfalteten Strahlengang in einer Abtasteinrichtung.

Eine mittels einer Welle W4 drehbar gelagerte Teilscheibe TT4 ist mit einem nicht gezeigten drehbaren Objekt verbunden. Die Teilscheibe TT4 weist auf einer ebenen Oberfläche 04 eine zu ihrem Mittelpunkt M4 konzentrische Winkelteilung WT4 in Form eines Beugungsgitters auf, die aus evolventenförmigen Teilungsstrichen TS4 besteht, die von einem im Mittelpunkt M4 der Teilscheibe TT4 zentrierten Grundkreis GK4 mit dem Radius R4 ausgehen; die Breite der evolventenförmigen Teilungsstriche TS4 und der Abstand zwischen diesen sind gleich.

Diese Winkelteilung WT4 mit einer Gitterkonstanten G4a wird von der mit einem nicht gezeigten feststehenden Objekt verbundenen Abtasteinrichtung abgetastet, die eine Lichtquelle L4 in Form eines Halbleiterlasers, vier Umlenkspiegel US4a-US4d, zwei Linearteilungen LT4a, LT4b sowie ein Photoelement P4 aufweist; die Gitterkonstante G4b der beiden Linearteilungen LT4a, LT4b ist mit der Gitterkonstanten G4a der evolventenförmigen Winkelteilung WT4 der Teilscheibe TT4 identisch. Es können das drehbare Objekt durch eine Spindel und das feststehende Objekt durch das Bett einer Bearbeitungsmaschine gebildet sein.

Ein vom Halbleiterlaser L4 ausgehender linear polarisierter Lichtstrahl LS4 durchsetzt senkrecht zur ebenen Oberfläche 04 der Teilscheibe TT4 einen ersten Winkelteilungsbereich WB4a der evolventenförmigen Winkelteilung WT4 der Teilscheibe TT4 im Durchlicht, der beliebig auf einer ersten Tangente T4a an den Grundkreis GK4 liegt, und wird von der als Beugungsgitter ausgebildeten Winkelteilung WT4 des ersten Winkelteilungsbereiches WB4a in einen positiven Beugungsstrahl + BS4 erster Ordnung unter einem positiven Beugungswinkel + α4 und in einen negativen Beugungsstrahl – BS4 erster Ordnung unter einem negativen Beugungswinkel – α4 zur optischen Achse OA4 des Strahlengangs aufgespalten.

Die beiden unter den beiden zugehörigen Beugungswinkeln +α4, – α4 vom ersten Winkelteilungsbereich WB4a in einer ersten Ebene E4a durch die erste Tangente T4a senkrecht zur Oberfläche 04 der Teilscheibe TT4 ausgehenden Beugungsstrahlen + BS4, – BS4 erster Ordnung werden vom ersten Umlenkspiegel US4a in dieser ersten Ebene E4a umgelenkt und von der ersten Linearteilung LT4a parallelgerichtet. Die beiden parallelen Beugungsstrahlen + BS4, – BS4 werden sodann vom zweiten Umlenkspiegel US4b in eine zweite Ebene E4b senkrecht zur ersten Ebene E4a und senkrecht zur Oberfläche 04 der Teilscheibe TT4 umgelenkt. Nach einer Umlenkung durch den dritten Umlenkspiegel US4c in eine dritte Ebene E4c parallel zur ersten Ebene E4a werden die beiden Beugungsstrahlen + BS4, – BS4 von der zweiten Linearteilung LT4b unter den gleichen zugehörigen Beugungswinkeln + α4, – α4 gebeugt und nach einer Umlenkung durch den vierten Umlenkspiegel US4d in dieser dritten Ebene E4c in einem zweiten Winkelteilungsbereich WB4b der Winkelteilung WT4 vereinigt, der beliebig auf einer zweiten Tangente T4b an den Grundkreis GK4 liegt. Die dritte Ebene E4c verläuft senkrecht zur Oberfläche 04 der Teilscheibe TT4 durch die zweite Tangente T4b, die antiparallel zur ersten Tangente T4a angeordnet ist.

Im zweiten Winkelteilungsbereich WB4b werden die beiden Beugungsstrahlen + BS4, – BS4 von der als Beugungsgitter ausgebildeten Winkelteilung WT4 zur Interferenz gebracht und fallen senkrecht zur Oberfläche 04 der Teilscheibe TT4 auf das Photoelement P4, das ein periodisches Abtastsignal S4 bei der Abtastung der evolventenförmigen Winkelteilung WT4 durch die Abtasteinrichtung liefert. In einer der Abtasteinrichtung nachgeschalteten Auswerteinrichtung AW4 werden aus dem periodischen Abtastsignal S4 des Photoelements P4 die Meßwerte für die Winkellage der beiden relativ zueinander drehbaren Objekte gewonnen.

Bei der interferometrischen Abtastung jeweils der beiden Winkelteilungsbereiche WBa, WBb der evolventenförmigen Winkelteilungen WT können die Abtaststellen innerhalb der Winkelteilungsbereiche WBa, WBb beliebig auf den Tangenten Ta, Tb an den Grundkreisen GK liegen, da die evolventenförmigen Winkelteilungen WT längs der Tangenten Ta, Tb nicht aufgefächert sind und sich bei den Winkelgeschwindigkeiten w der Teilscheiben TT längs dieser Tangenten Ta, Tb an den Grundkreisen GK linear mit den Geschwindigkeiten v = Rw bewegen.

Die Erstreckung der Abtaststellen der Winkelteilungsbereiche WBa, WBb senkrecht zu den Tangenten Ta, Tb muß so klein gewählt werden, daß die Krümmungen der Teilungsstriche TS klein gegenüber den Gitterkonstanten Ga der Winkelteilungen WT sind und somit vernachlässigt werden können.

Da die Gitterkonstanten Gb der Linearteilungen LT mit den Gitterkonstanten Ga der Winkelteilungen WT identisch sind, werden die beiden Beugungsstrahlen + BS, – BS wieder parallel gerichtet, und zwar unabhängig von temperaturbedingten Änderungen der Wellenlängen der Lichtstahlen LS. Störende Beugungsstrahlen nullter Ordnung können durch Schwärzungen der Mittelbereiche der Linearteilungen LT und störende Beugungsstrahlen höherer Ordnung durch Blenden absorbiert werden.

Die evolventenförmigen Winkelteilungen WT können als Amplitudengitter oder als Phasengitter ausgebildet sein; Phasengitter senden in der nullten Ordnung keine Lichtstrahlen aus.

Phasenverschobene periodische Abtastsignale Sa, Sb erhält man durch polarisationsoptische Mittel TP oder durch Auswertung mehrerer Interferenzrichtungen ; dazu eignen sich besonders Phasengitter, deren Tiefe und Stegbreite so gewählt wird, daß die gewünschte Phasenverschiebung von 90° entsteht.

Die Anordnung der Umlenkspiegel US und der Linearteilungen LT wird so gewählt, daß die Geschwindigkeitsvektoren v an den beiden Abtaststellen der Winkelteilungsbereiche WBa, WBb parallel oder antiparallel zueinander gerichtet sind.

## Ansprüche

1. Lichtelektrische Winkelmeßeinrichtung zur Messung der Winkellage zweier relativ zueinander drehbarer Objekte, bei der wenigstens eine Winkelteilung (WT) einer mit dem einen Objekt verbundenen Teilscheibe (TT) von einer mit dem anderen Objekt verbundenen Abtasteinrichtung mittels Lichtstrahlenbeugung abgetastet wird, und die wenigstens eine Winkelteilung (WT) der Teilscheibe (TT) aus evolventenförmigen Teilungsstrichen (TS) besteht, die von einem im Mittelpunkt (M) der Teilscheibe (TT) zentrierten Grundkreis (GK) ausgehen.

2. Meßeinrichtung nach Anspruch 1, dadurch gekennzeichnet, daß die Teilscheibe (TT1, TT3, TT4) eine evolventenförmige Winkelteilung (WT1, WT3, WT4) aufweist, die an zwei Winkelteilungsbereichen (WB1a, WB1b, WB3a, WB3b, WB4a, WB4b) von der Abtasteinrichtung abgetastet wird, die auf zwei gegenüberliegenden Tangenten (T1a, T1b, T3a, T3b, T4a, T4b) an den Grundkreisen (GK1, GK3, GK4) liegen.

3. Meßeinrichtung nach Anspruch 1, dadurch gekennzeichnet, daß die Teilscheibe (TT2) zwei konzentrische evolventenförmige Winkelteilungen (WT2a, WT2b) aufweist und daß die Abtasteinrichtung einen ersten Winkelteilungsbereich (WB2a) der ersten Winkelteilung (WT2a) und einen zweiten Winkelteilungsbereich (WB2b) der zweiten Winkelteilung (WT2b) ab tastet, die auf zwei Tangenten (T2a, T2b) an den Grundkreis (GK2) auf der gleichen Hälfte der Teilscheibe (TT2) liegen.

4. Meßeinrichtung nach Anspruch 2, dadurch gekennzeichnet, daß die Abtasteinrichtung einen Halbleiterlaser (L1), vier Umlenkspiegel (US1a-US1d), zwei Linearteilungen (LT1a, LT1b) sowie ein Photoelement (P1) aufweist.

5. Meßeinrichtung nach Anspruch 3, dadurch gekennzeichnet, daß die Abtasteinrichtung einen Halbleiterlaser (L2), vier Umlenkspiegel (US2a-US2d), zwei Linearteilungen (LT2a, LT2b), ein polarisierendes Teilerprisma (TP2) sowie zwei Photoelemente (P2a, P2b) aufweist.

6. Meßeinrichtung nach Anspruch 2, dadurch gekennzeichnet, daß die Abtasteinrichtung einen Halbleiterlaser (L3), sechs Umlenkspiegel (US3a-US3f), ein polarisierendes Teilerprisma (TP3) sowie zwei Photoelemente (P3a, P3b) aufweist.

7. Meßeinrichtung nach Anspruch 2, dadurch gekennzeichnet, daß die Abtasteinrichtung einen Halbleiterlaser (L4), vier Umlenkspiegel (US4a-US4d), zwei Linearteilungen (LT4a, LT4b) sowie ein Photoelement (P4) aufweist.

8. Meßeinrichtung nach den Ansprüchen 2, 4 und 7, dadurch gekennzeichnet, daß die Gitterkonstante (G1a, G4a) der Winkelteilung (WT1, WT4) und die Gitterkonstante (G1b, G4b) der beiden Linearteilungen (LT1a, LT1b, LT4a, LT4b) identisch sind.

9. Meßeinrichtung nach den Ansprüchen 3 und 5, dadurch gekennzeichnet, daß die Gitterkonstante (G2a) der beiden Winkelteilungen (WT2a, WT2b) und die Gitterkonstante (G2b) der beiden Linearteilungen (LT2a, LT2b) identisch sind.

10. Meßeinrichtung nach Anspruch 1, dadurch gekennzeichnet, daß die evolventenförmige Winkelteilung (WT) als Amplitudengitter oder als Phasengitter ausgebildet ist.

## Claims

1. Photoelectric angle measuring device for measuring the angular position of two objects rotatable relative to one another, in which at least one angular graduation (WT) of a graduated disc (TT) connected to one of the objects is sensed by a sensing device connected to the other object by means of light ray diffraction, and the at least one angular graduation (WT) of the graduated disc (TT) consists of graduation lines (TS) of involute form, which run out from a base circle (GK) centred on the midpoint (M) of the graduated disc (TT).

2. Measuring device according to claim 1, characterized in that the graduated disc (TTI, TT3, TT4) has one angular graduation (WTI, WT3, WT4) of involute form, which is sensed at two angular graduation regions (WB1a, WB1b, WB3a, WB3b, WB4a, WB4b) by the sensing device, which lie on two opposite tangents (T1a, T1b, T3a, T3b, T4a, T4b) to the base circle (GK1, GK3, GK4).

3. Measuring device according to claim 1, characterized in that the graduated disc (TT2) has two concentric angular graduations (WT2a, WT2b) of involute form and in that the sensing device senses a first angular graduation region (WB2a) of the first angular graduation (WT2a) and a second angular graduation region (WB2b) of the second angular graduation (WT2b), which lie on two tangents (T2a, T2b) to the base circle (GK) on the same half of the graduated disc (TT2).

4. Measuring device according to claim 2, characterized in that the sensing device comprises a semiconductor laser (L1), four deflecting mirrors (US1a-US1d), two linear graduations (LT1a, LT1b) as well as a photo-element (P1).

5. Measuring device according to claim 3, characterized in that the sensing device comprises a semiconductor laser (L2), four deflecting mirrors (US2a-US2d), two linear graduations (LT2a, LT2b), a polarising splitter prism (TP2) as well as two photo-elements (P2a, P2b).

6. Measuring device according to claim 2, characterized in that the sensing device comprises a semiconductor laser (L3), six deflecting mirrors (US3a-US3f), a polarising splitter prism (TP3) as well as two photo-elements (P3a, P3b).

7. Measuring device according to claim 2, characterized in that the sensing device comprises a semiconductor laser (L4), four deflecting mirrors (US4a-US4d), two linear graduations (LT4a, LT4b) as well as a photo-element (P4).

8. Measuring device according to claims 2, 4 and 7, characterized in that the grating constant (G1a, G4a) of the angular graduation (WT1, WT4) and the grating constant (G1b, G4b) of the two linear graduations (LT1a, LT1b, LT4a, LT4b) are identical.

9. Measuring device according to claims 3 and 5, characterized in that the grating constant (G2a) of the two angular graduations (WT2a, WT2b) and the grating constant (G2b) of the two linear graduations (LT2a, LT2b) are identical.

10. Measuring device according to claim 1, characterized in that the angular graduation (WT) of involute form is formed as an amplitude grating or as a phase grating.

## Revendications

1. Dispositif de mesure d'angle photo-électrique pour la mesure de la position angulaire relative de deux objets pouvant tourner l'un par rapport à l'autre, dans lequel au moins une division angulaire (WT) d'un disque gradué lié à l'un des objets est lu par un dispositif de lecture lié à l'autre objet par diffraction des rayons lumineux, et au moins l'une des divisions angulaires (WT) du disque gradué (TT) se compose de repères de graduation (TS) en développantes, qui s'étendent à partir d'un cercle de base (GK) centré sur le centre (M) du disque gradué (TT).

2. Dispositif de mesure selon la revendication 1, caractérisé en ce que le disque gradué (TT1, TT3, TT4) présente une division angulaire (WT1, WT3, WT4) en développante, qui est lue par le dispositif de lecture en deux zones de la division angulaire (WB1a, WB1b, WB3a, WB3b, WB4a, WB4b), situées sur deux tangentes (T1a, T1b, T3a, T3b, T4a, T4b) au cercle de base (GK1, GK3, GK4) opposées.

3. Dispositif de mesure selon la revendication 1, caractérisé en ce que le disque gradué (TT2) comporte deux divisions angulaires (WT2a, WT2b) en développantes concentriques, et en ce que le dispositif de lecture lit une première zone de division angulaire (WB2a) de la première division (WT2a) et une deuxième zone de division angulaire (WB2b) de la deuxième division angulaire (WT2b), qui sont situées sur deux tangentes (T2a, T2b) au cercle de base (GK2) dans la même moitié du disque gradué (TT2).

4. Dispositif de mesure selon la revendication 2, caractérisé en ce que le dispositif de lecture comporte un laser à semi-conducteur (L1), quatre miroirs de déviation (US1a-US1d), deux graduations linéaires (LT1a, LT1b) ainsi qu'une cellule photo-électrique (P1).

5. Dispositif de mesure selon la revendication 3, caractérisé en ce que le dispositif de lecture comporte un laser à semi-conducteur (L2), quatre miroirs de déviation (US2a-US2d), deux graduations linéaires (LT2a, LT2b), un prisme séparateur polarisant (TP2) ainsi que deux cellules photo-électriques (P2a, P2b).

6. Dispositif de mesure selon la revendication 2, caractérisé en ce que le dispositif de lecture comporte un laser à semi-conducteur (L3), six miroirs de déviation (US3a-US3f), un prisme séparateur (TP3) polarisant ainsi que deux cellules photo-électriques (P3a, P3b).

7. Dispositif de mesure selon la revendication 2, caractérisé en ce que le dispositif de lecture comporte un laser à semi-conducteur (L4), quatre miroirs de déviation (US4a-US4d), deux graduations linéaires (LT4a, LT4b) ainsi qu'une cellule photo-électrique (P4).

8. Dispositif de mesure selon les revendications 2, 4 et 7, caractérisé en ce que la constante de réseau (G1a, G4a) de la division angulaire (WT1, WT4) et la constante de réseau (G1b, G4b) des deux graduations linéaires (LT1a, LT1b, LT4a, LT4b) sont identiques.

9. Dispositif de mesure selon la revendication 3 et 5, caractérisé en ce que la constante de réseau (G2a) des deux divisions angulaires (WT2a, WT2b) et la constante de réseau (G2b) des deux graduations linéaires (LT2a, LT2b) sont identiques.

10. Dispositif de mesure selon la revendication 1, caractérisé en ce que la division angulaire (WT) en développante est réalisée sous forme de réseaux d'amplitude ou de réseaux de phase.

Fig. 1

Fig. 2

Fig. 3

# Fig. 4

## Fig. 5

Fig. 6

Fig. 7

Fig. 8

Fig. 9

Fig. 10

Fig. 11

Fig. 12

Fig. 13

13